# EUROPEAN PATENT SPECIFICATION

(11) **EP 4 074 016 B1**
(45) Date of publication and mention of the grant of the patent: **20.03.2024**
(21) Application number: 19818055.6
(22) Date of filing: 10.12.2019
(51) Int. Cl.: H04L 65/1053, H04M 1/57, H04M 3/42, H04M 1/2745, H04M 1/2757

(54) **METHOD OF SYNCHRONIZING CONTACT INFORMATION FOR AT LEAST TWO COMMUNICATION DEVICES IN A COMMUNICATION SYSTEM AND TO A COMMUNICATION SYSTEM**
VERFAHREN ZUM SYNCHRONISIEREN VON KONTAKTINFORMATIONEN FÜR MINDESTENS ZWEI KOMMUNIKATIONSGERÄTE IN EINEM KOMMUNIKATIONSSYSTEM UND ZU EINEM KOMMUNIKATIONSSYSTEM
PROCÉDÉ DE SYNCHRONISATION D'INFORMATIONS DE CONTACT POUR DEUX DISPOSITIFS DE COMMUNICATION OU PLUS DANS UN SYSTÈME DE COMMUNICATION ET AVEC UN SYSTÈME DE COMMUNICATION

(43) Date of publication of application: 19.10.2022
(73) Proprietor: Unify Patente GmbH & Co. KG, 81739 München (DE)
(72) Inventor: GIATILIS, Vasileios, 17561 Palaio Faliro (GR); KAMPERIS, Aris, 13673 Acharnai (GR)
(74) Representative: Schaafhausen Patentanwälte PartGmbB
(86) International application number: PCT/EP2019/084477
(87) International publication number: WO 2021/115575

(56) References cited:
- US-A1- 2007 038 720
- US-A1- 2018 103 137

## Description

The present invention relates to a method of synchronizing contact information for at least two communication devices in a communication system and to a communication system which is adapted to carry out the method of synchronizing contact information for at least two communication devices.

Nowadays, nearly everybody uses a variety of telephony devices during the day, as a home telephone, a mobile device, an office telephone, etc. For instance, a business telephone system which typically is employed in business environments may comprise a Private Branch Exchange (PBX) as telephone exchange or switching system. Such a PBX in combination with direct Direct Inward Dial (DID) enables users of the telephone system to register with more than one device, for example with a deskphone and with a mobile device, under the same DID number. Thus, a person who is working during office hours, in the office, may use a deskphone, and simultaneously her/his mobile phone in addition.

However, a problem exists in the above described scenario when a call is received by the user and the caller's information is not stored in the underlined communication system, even though there is a contact with this number stored on the mobile device. On the deskphone device, there will be no name or other information pertaining to that call, while on the mobile phone it will.

This problem is most commonly solved by synchronizing the databases of the communication systems with each another. However synchronization of the contacts between different devices is rather inconvenient and laborious for the user. Moreover, it requires regular updates from user side and it needs to be aligned with the correct database format, etc.

A common solution for synchronizing contact data among communication devices known from prior art is based on using a centralized contact database in the cloud and local replication of the database in each communication device. The disadvantage of the approach, however, is that it requires access to the internet in order to synchronize the contacts. Also, the integration of already existing contact databases with respect to low budget devices registered at a PBX is not possible, since the IP interface, here, is totally missing (e.g. DECT devices).

Therefore, the present invention is based on the object to provide a method of synchronizing contact information for at least two communication devices in a communication system and a corresponding communication system according to which synchronization of contacts amongst several devices used by a user in a telecommunication system is facilitated.

Document US 2018/103137 A1 discloses a method for synchronizing contact data in related devices when contact data is updated in anyone of the related devices. Document US 2007/038720 A1 discloses a method for sharing address book contact information between subscribers.

The object is solved by a method of synchronizing contact information for at least two communication devices in a communication system having the features according to claim 1 and by a communication system which is adapted to carry out the method of synchronizing contact information for at least two communication devices having the features according to claim 12. Preferred embodiments of the invention are defined in the respective dependent claims.

According to the present invention, a method of synchronizing contact information for at least two communication devices in a communication system is provided, wherein a first communication device and a second communication device of the at least two communication devices are registered at the communication system with the same DID, the method comprising the steps of receiving, at the communication system, an external call of an external calling device; identifying the telephone number of the external calling device; transmitting a SETUP message to the first communication device and another SETUP message to the second communication device; receiving, from either one of the first and second communication devices, a message comprising contact information pertaining to the telephone number of the external calling device; sending a message comprising the contact information pertaining to the telephone number of the of the external calling device to the other one of the first and second communication devices for being displayed and stored at the other one of the first and second communication devices.

Thus, according to method of the present invention, a user who has registered with more than one communication device to a PBX is enabled, on all registered devices, to receive caller information and moreover, the devices may be updated and synchronized without the user having to take care of this procedure. Thus, the synchronization procedure is substantially facilitated for the user. Also, no central database and thus, a communication network or communication link via the internet is not required in order to retrieve and synchronize contacts amongst several communication devices.

According to a preferred embodiment of the invention, the message received from either one of the first and second communication devices comprising the contact information pertaining to the telephone number of the incoming call is an ALERT message.

According to another preferred embodiment of the invention, the method further comprises a step of receiving, from the other one of the first and second communication devices an ALERT message.

According to still another preferred embodiment of the invention, the method further comprises a step of sending an ALERT message to the calling communication device.

Preferably, the message comprising the contact information pertaining to the telephone number of the incoming call sent to the other one of the first and second communication devices is an UPDATE message.

Further, according to another preferred embodiment of the invention, the method further comprises a step of searching a database connected to the communication system for contact information pertaining to the telephone number of the incoming call.

Moreover, the telephone system may be a PBX.

Preferably, the method further comprises a step of sharing the contact information with a plurality of communication devices connected to the communication system and which are registered at the communication system with different DIDs.

According to still another preferred embodiment of the invention, the plurality of communication devices belong to a group of a call center.

Also, the incoming call may be a group call.

The first communication device may be a deskphone and the second communication device may be a mobile phone.

Moreover, according to the present invention, a communication system, in particular, PBX, is provided, which is adapted to carry out the method of s synchronizing contact information for at least two communication devices as outlined above.

The invention and embodiments thereof will be described below in further detail in connection with the drawing.
- Fig. 1: schematically shows an arrangement of a telephone system according to prior art;
- Fig. 2: schematically illustrates a call flow according to an embodiment of the invention;
- Fig. 3: illustrates another scenario of a telephone system according to an embodiment of the invention;
- Fig. 4: shows a flowchart for the procedure of resolving a telephone number of an incoming call in a contact center according to an embodiment of the invention;
- Fig. 5: shows a flowchart for the procedure of resolving a telephone number of an incoming call in a contact center according to another embodiment of the invention;
- Fig. 6: shows another scenario of a communication system according to a further embodiment of the invention;
- Fig. 7: shows two tables comprising personal contacts stored on respective communication devices;
- Fig. 8: illustrates a call flow according to another embodiment of the invention; and
- Fig. 9: shows a flowchart describing the logic of a client processing the SETUP and UPDATE messages according to an embodiment of the invention.

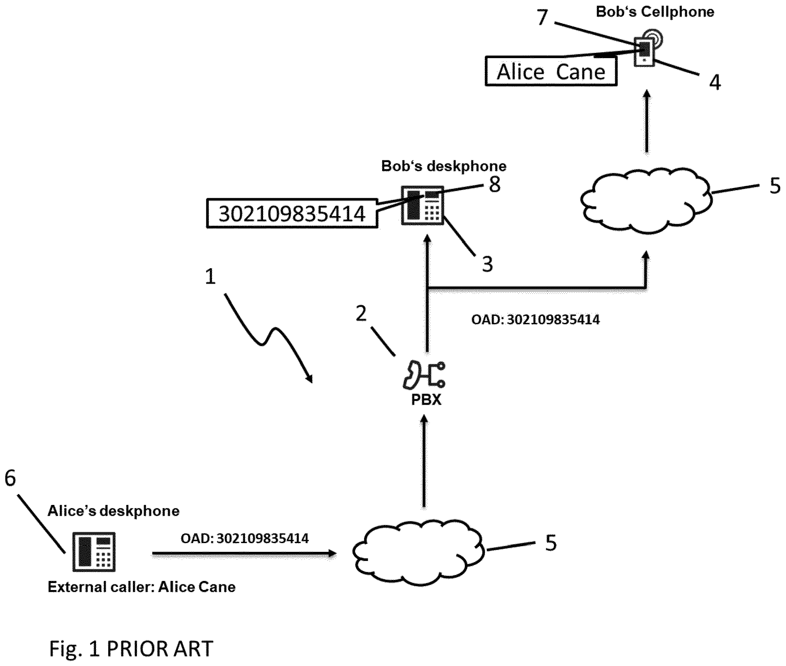

Fig. 1 schematically shows an arrangement of a telephone system 1 according to prior art with a PBX 2 at which a user (here, the user is named "Bob") has registered with the same DID for a first device, which here is a deskphone 3 directly connected to the PBX 2, and with a second device, which here is a mobile device 4, connected to the PBX 2 via the internet or via another communication network 5. In the illustrated scenario of Fig. 1, the user receives a call from an external caller (here, the external caller is named "Alice Cane" connected to the PBX 2 via the internet or via another communication network 5) using another deskphone 6. Both stations, the first device 3 (Bob's deskphone) and the second device 4 (Bob's mobile phone) are signaled, for example, by ringing or other means. The caller (namely, Alice Cane or Alice's deskphone device) is unknown to the telephony system 1. However, the caller's contact is stored on the contact list of the second device 4, namely, in mobile phone's contact list. Thus, the caller's telephone number is only resolved at the display 7 of the second device 4, while the first device 3, Bob's deskphone, does not identify the external caller of the telephone number of the incoming call. Here, only the telephone number of the incoming call is displayed at the display device 8 of the first device 3.

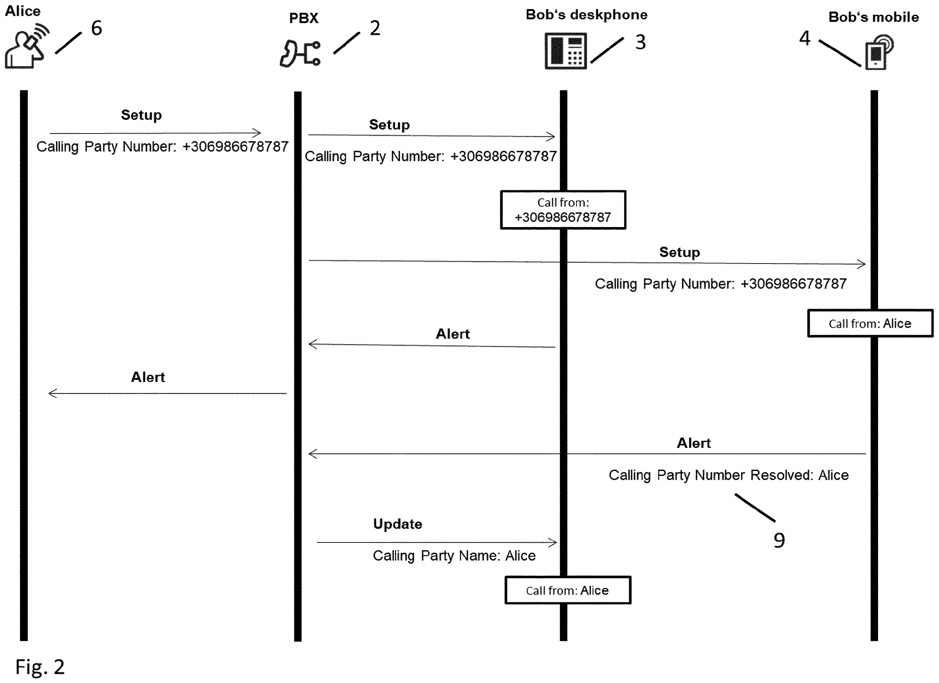

Fig. 2 schematically illustrates a call flow according to an embodiment of the invention wherein an incoming call may be identified at all devices registered with the same DID at a PBX 2 of a telephone system 1. The procedure according to an embodiment refers to the arrangement of a telephone system 1 illustrated in Fig. 1.

Both devices will ring and show the same contact at their displays. Alice is a contact stored locally to Bob's mobile device.

Again, a call is made by an external caller named "Alice". In particular, here, Alice calls Bob from her mobile phone 6. Thus, the SETUP message with the telephone number of the calling party is instantiated in both endpoints accordingly, namely, the first device 3 which is Bob's deskphone, and the second device 4, which is Bob's mobile phone. Since both devices 3, 4 are signaled and are ringing, they will both return an ALERT message back to the PBX 2. "Alice" is a contact stored locally in Bob's mobile device, namely, the second device 4. Since in the SETUP message, only the telephone number of the calling party as mentioned above, but no contact information pertaining to this telephone number is included, the ALERT message sent back from the second device 4, namely, Bob's mobile phone which has identified the caller information of the telephone number received in the SETUP message in its contact list, comprises a special element, a so called 'Calling Party Name Resolved' element 9 including the caller's name (here in the example, "Alice"). It is noted that, of course, the information transmitted from the second device 4 back to the PBX 2 in the corresponding ALERT message may also comprise other contact data assigned to the telephone number received in the SETUP message, as company name, address, etc. As the 'Calling Party Name Resolved' element 9 is received in the corresponding ALERT message by the PBX 2, the latter will read this information and will send it to the first device 3, which was not able to identify the telephone number in a corresponding contact list or the like, so that the contact information, here, the name "Alice" will be displayed at the first device's display 8. For the transmission of this information, an UPDATE message sent from the PBX 2 to the first device 3 is used.

Further, the ALERT message is also transmitted to the initial caller 6. The communications system or in the embodiment illustrated here, the PBX 2, collects all ALERT messages, filters the information that will be used internally, and on the basis of the thus filtered information, updates the name or contact information, since this information is redundant to the caller or the caller's communication system.

It is noted that in a case, in which the caller's name is already resolved by the communications system, i.e. the SETUP message already contains the name or other relevant contact information, the second device 4 will not send back the (then) redundant information in the ALERT message.

It is noted that the procedure described above may be applied in accordance with different protocols, like ISDN/SIP/GSM/Analog by utilizing the protocol specific signaling for the SETUP, ALERT, and UPDATE messages. The embodiment described above in connection with Fig. 2 is using the "ALERT" message to pass the "Calling Party Name Resolved" information. However, any other protocol message may be used to transfer this information from the device that is able to identify the telephone number received and assign it to contact information, as the name or address, etc. back to the PBX 2. Likewise, the UPDATE message may be replaced by any other protocol specific message that is able to transmit the "Calling Party Name" information from the PBX 2 to the device that is not able to identify the telephone number received (here, in the embodiment described that is the first device 3).

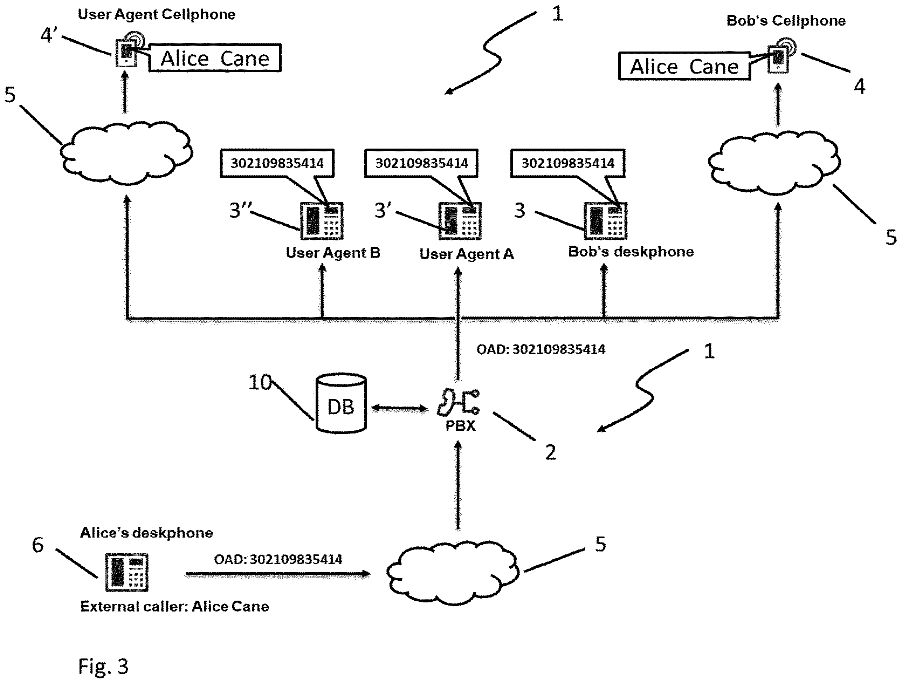

Fig. 3 illustrates another scenario of a telephone system 1 according to an embodiment of the invention. Here, there are 4 agents in a Uniform Call Distributer (UCD) group (or contact center group). This scenario is not a direct extension of the embodiment described above, since there are more agents involved, thus, the caller's contact information contact must be prioritized.

It can be seen here, that the communication system 1 has its own interface to a contact database 10. The name resolution that may be provided by this database 10 may be accomplished asynchronously, and subsequently to receiving the contact name delivered by mobile devices 4, 4' which may, for example, be smart phones.

To begin with, whenever there is a call with a known name, the communication system 1 will not further ask for name or contact information since this is redundant. Therefore, the method should only be triggered or initiated, whenever the name belonging to a telephone number of an incoming call cannot be resolved by the system itself. However, this is only important with respect to the case of a contact center scenario, in which there is a plurality of stations connected with their mobility entries. The reason for this is explained in the following.

There may be a flood of name information from different sources, and this will add unnecessary load to the communication system's processing power. For many mobile applications, it would be not ideal to search for the name or contact information assigned to every incoming call received by the system. Thus, this is only done whenever no caller name is provided in the SETUP message. Furthermore, the communication system 1 or the PBX 2 searches for a name resolution in the connected databases 10 and in parallel sends the SETUP messages to the call agents 3, 3', 3", 4, 4'.

However, thee name or contact information is delivered first by an ALERT message returned to the PBX 2, this information may be used, but it should be overridden as soon as they an entry of the database 10 is returned or may be retrieved by the PBX 2.

It is noted that in this figure, there are two mobile devices 4, 4' that both have stored contact information in their respective contact list for a telephone number of an incoming call. In this case the first ALERT message received by the PBX 2 will be used.

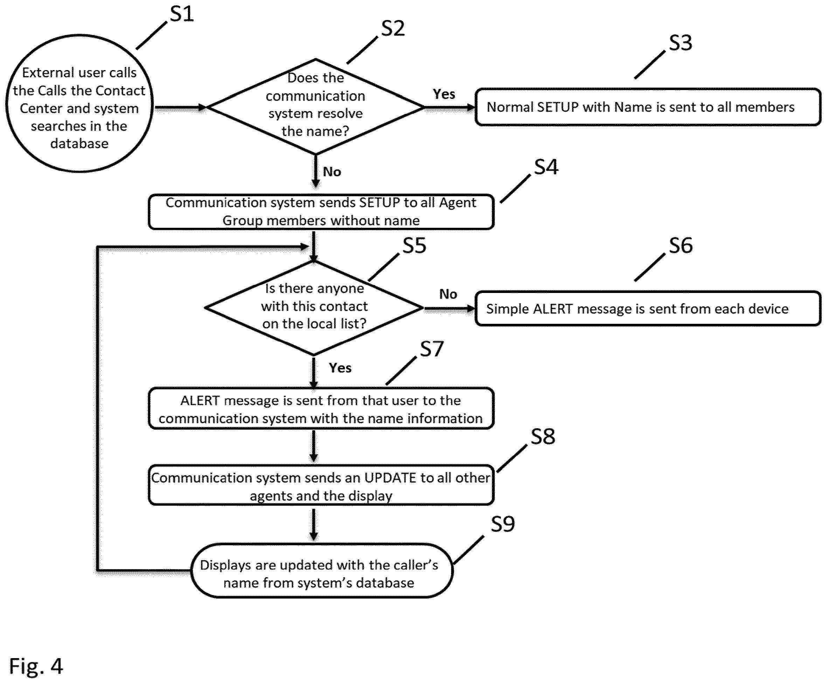

Fig. 4 shows a flowchart for the procedure of resolving a telephone number of an incoming call in a contact center according to an embodiment of the invention. In a first step S1, a call of an external caller is received at the contact center and the system searches the database for contact information, for example, a name of the caller assigned to the telephone number of the external call. In a second step S2, it is verified, whether the communication system, namely, the PBX or the like, itself resolves the name belonging to the telephone number of the call received. If so, then a normal SETUP message comprising the name belonging to the telephone number of the incoming call is sent to all members or devices connected to the communication system (for example, to all agents or devices 3, 3', 3", 4, 4' illustrated in Fig. 3). If the contact information may not be resolved, then in a fourth step S4, the communication system sends a SETUP message to all agent group members or devices, see above, without the name or other contact information belonging to the telephone number of the incoming call. In a subsequent step S5, it is determined whether any local list, i.e., a contact list comprised in any one of the devices 3, 3', 3", 4, 4' comprises the contact or contact information with respect to the telephone number of the incoming call. If not, a simple ALERT message is sent back to the PBX or communication system. However, if a contact is found in any one of the contact lists of the devices 3, 3', 3", 4, 4', then, in a further step S7, the corresponding device sends an ALERT message to the PBX 2 with the contact information, for example, with the name or address or the like. Then, in step S8, the PBX or communication system sends an UPDATE message to all other agents or devices that are not able to verify the telephone number of the incoming call so as to display the contact information on their respective displays or display devices. In step S9, the displays are updated with the caller's name from the telecommunication system's database (as database 10 of the embodiment shown in Fig. 3).

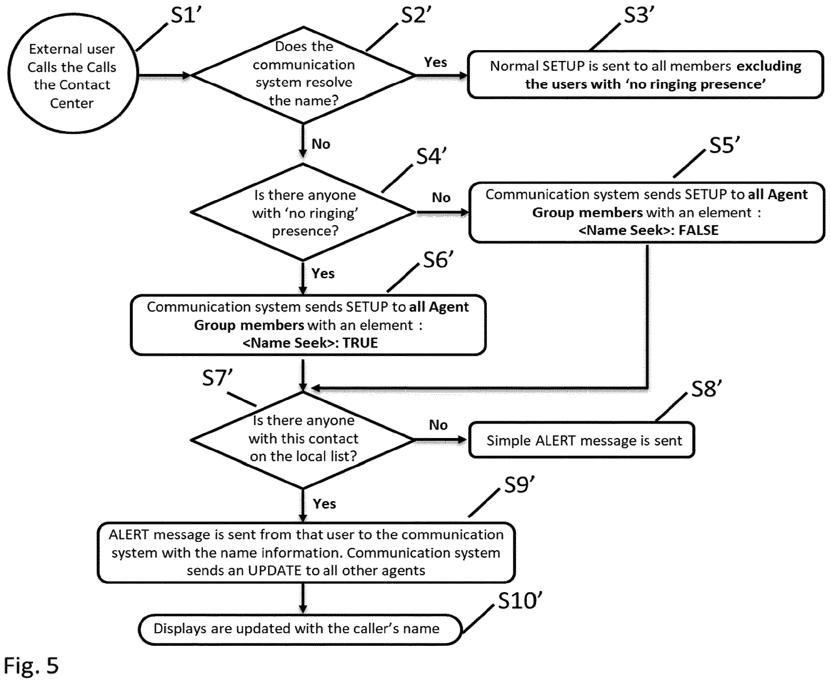

Fig. 5 shows a flowchart for the procedure of resolving a telephone number of an incoming call in a contact center according to another embodiment of the invention. Here, the issue is considered that as part of an agent group, members may have various presence statuses (for example, online, breaks, vacations, etc). Whenever there is a presence status other than online, it may mean that the user will not get signaled at all. For example, assuming a group of 20 members, all of them having mobile devices as well as deskphones. Now, if 10 out of the 20 members are in a status other than online, this means their mobile device will not ring. Thus, the chance to identify a telephone number of an incoming call on any one of the contact lists of the mobile devices are reduced by 50% due to the status not being online and thus, due to the lack of signaling these devices. To avoid lowering the chances in such a scenario as outlined above, the procedure in general will be carried out as follows:

First, an external call is received in the contact center, or at its PBX. Then it is verified whether the communication system or the PBX is able to resolve the telephone number with respect to the caller information by itself. If so, a normal SETUP message is sent to all members of the group (namely, to all devices connected to the PBX) irrespective of their status. However, the members or devise that have a status other than online indicating that they do not wish to be signaled, will receive a special SETUP message and a background look up will be started on that device or devices, without the user noticing it. This 'special' SETUP message will be a typical setup message with a new element inside its body called: NameSeek. In this case, the value will be:

### <NameSeek>: TRUE

If a name is resolved at any device of these users, an ALERT message will be sent to the communication system or PBX with the resolved name or other contact information, and they will return to IDLE state. The communication system will obtain the information and discard the connection. It will then send then an UPDATE to all 'online' users only. Then, all `not online' users will return to IDLE.

Specifically, with respect to the single steps of the procedure as illustrated in the flowchart of Fig. 5, the procedure starts, in step S1', with the receipt of an external call at the PBX or communication system of the contact center. In step S2', it is verified, whether the communication system or PBX may resolve the name or other contact information with respect to the telephone number of the incoming call by itself. If so, in step S3', a normal SETUP message is sent to all communication devices or members of the group of the contact center, excluding the users with "no ringing" presence statuses. If the name cannot be resolved in step S2', then in step S4', it is verified, whether there is anybody with a "no ringing" presence status. If negative, then in step S5', the communication system or PBX sends a SETUP message to all agent group members or devices with an element **<NameSeek>: FALSE.** If in step S4' the result of the verification is positive, then in step S6', the communication system or PBX sends a SETUP message to all agent group members or communication devices with an element: **<NameSeek>: TRUE.** In step S7', it is further verified, whether there is anybody with this contact listed in a local contact list, i.e., it is verified whether any of the connected communication devices has a contact list comprising contact information stored locally and matching to the telephone number of the incoming call. If not, then a simple ALERT message is sent. If positive, then an ALERT message is sent from that device to the communication system or PBX comprising the name or other contact information and the communication system or PBX then sends an UPDATE message to all other communication devices connected to it. Finally, in step S10', the displays of the communication devices are all updated so as to display the name of the caller of the incoming call.

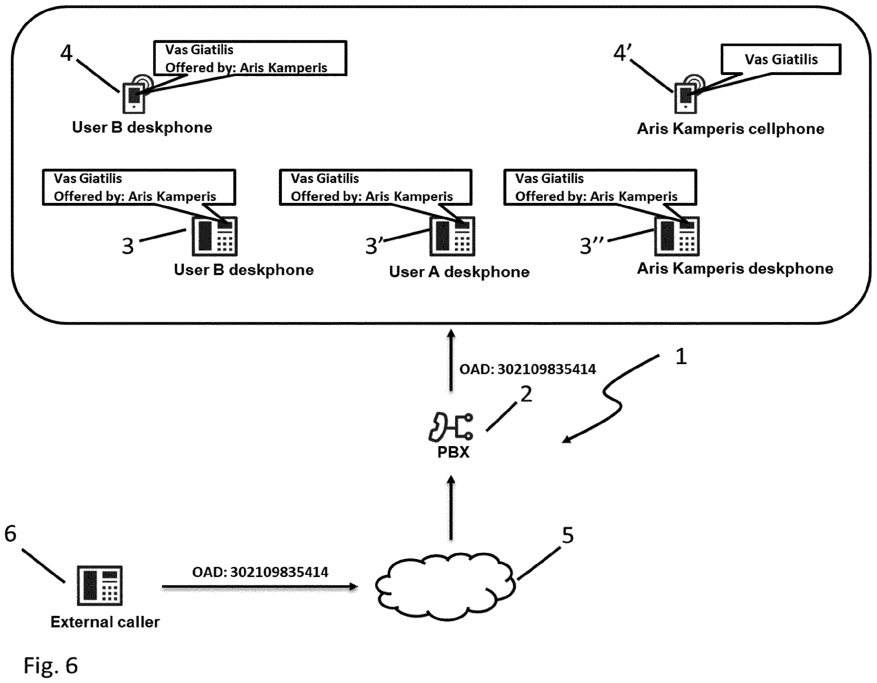

Fig. 6 shows another scenario of a communication system according to a further embodiment of the invention. Here, also the information is provided to the users of the devices 3, 3', 3", 4, 4' connected to the PBX 2 or communication system 1 as to which device contributed to sharing the missing contact, i.e., the device that has stored the contact information pertaining to the telephone number of the incoming call will be revealed to the other users and displayed on the other devices connected to the PBX 2. Namely, when sending the ALERT message back with the information of the caller from the device that has stored the corresponding information locally in a contact list, the communication system 1 may detect which user or which device was the one that shared this information. In this case, the display on the other users' side may show the name and the person (i.e. device) that contributed to this name. In this way the ringing users that received the information are able to identify that the name was not resolved by the communication system 1 or PBX 2 (thus, maybe this is a new customer, a new lead by the contributor, or the like). This entry may be further exploited, depending on the business, for example, the new customer may be inserted in the connected Customer Relationship Management (CRM) as an entry by the contributor, or the like.

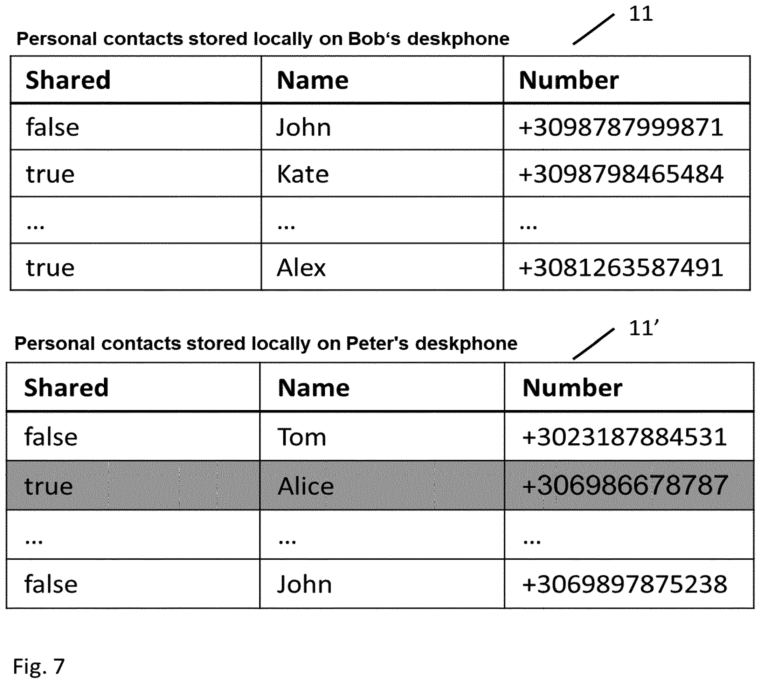

Fig. 7 shows two tables comprising personal contacts stored locally on respective communication devices. Here, the upper table relates to a deskphone of a first user (indicated as "Bob") and the lower table relates to a deskphone of another or second user (indicated as "Peter"), wherein both users belong to the same group and are connected to a communication system 1 or PBX 2, as described above. In the embodiment shown here, each contact stored in the contact list consists of a "Name", the corresponding "Number" (telephone number) and a special flag (true/false) that describes if the contact may be shared among users of a group, for example, in a case where a user or the users would like to share their personal contacts stored in the respective contact lists of their communication devices to have common number resolved during an incoming call to a group.

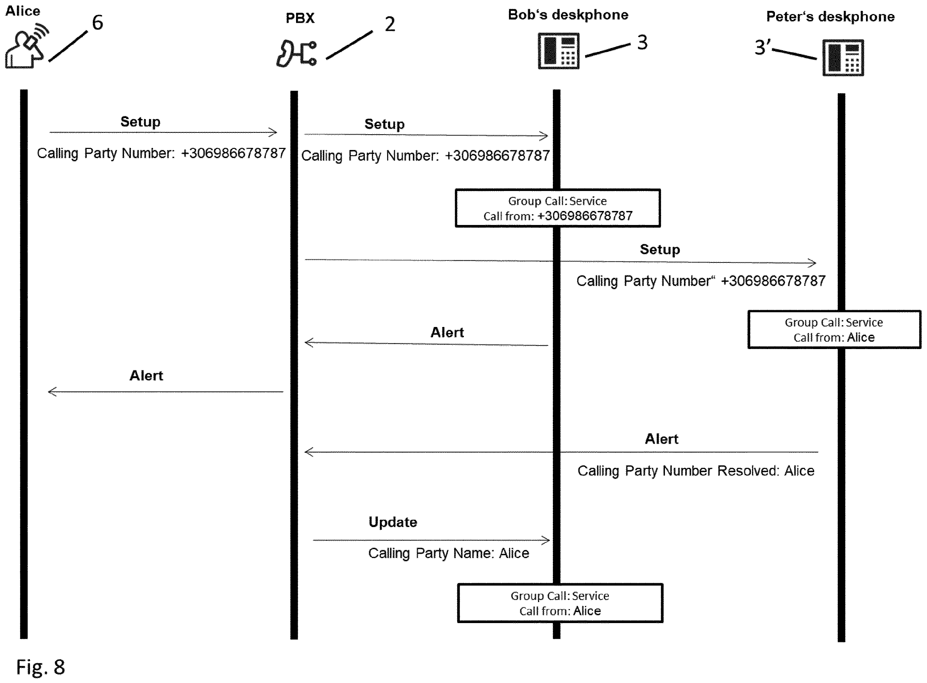

Fig. 8 illustrates a call flow according to another embodiment of the invention, which describes the basic call signaling for an incoming call made by an external caller 6 to a group "Service" which consists of two members, namely, Bob and Peter each having a communication device - deskphone 3 being assigned to Bob and deskphone 3' being assigned to Peter - connected to the PBX 2, whereby the contact "Alice" belonging to the telephone number of the incoming call is present only on Peter's deskphone 3' and will be shared also with Bob or Bob's deskphone 3 so that both devices 3, 3' will ring showing that the caller is "Alice" and the call is directed to the group "Service". In this procedure, again the telephone number of the incoming call which here is a group call is transmitted from the PBX 2 in a respective SETUP message to Bob's deskphone 3 and to Peter's deskphone 3'. The telephone number can be identified in Peter's deskphone 3' so that a corresponding ALERT message comprising the name or other contact information pertaining to the telephone number of the incoming group call is sent back to the PBX 2, whereas Bob's deskphone 3 only returns a normal ALERT message to the PBX 2. Upon receipt of this information, the PBX 2 sends an UPDATE message to Bob's deskphone 3 comprising the information on the caller pertaining to the telephone number of the incoming call.

It is noted that in case Bob had already stored Alice's telephone number in his own personal contact database, then the UPDATE message may be ignored.

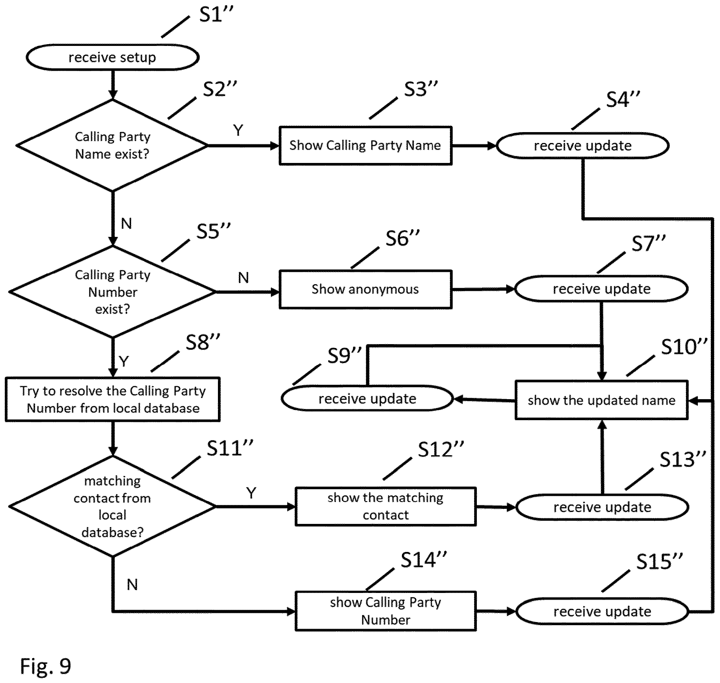

Fig. 9 shows a flowchart describing the logic of a client processing the SETUP and UPDATE messages according to an embodiment of the invention so as to decide what content will be shown to the user as caller for incoming calls.

In a first step S1 ", the SETUP message is received at the client. In the next step S2", it is determined, if the name of the calling party exists. If so, then in step S3", the calling party's name is shown, and an UPDATE message is received in step S4". If not, in step S5", it is verified again, if the name of the calling party exists. If the result is negative, in step S6", an indication is displayed that the caller is anonymous, and in step S7" an UPDATE message is received, continued by steps S10" or S9" which will be outlined below. If the result is positive, then in step S8", the client tries to resolve the calling party's telephone number from a local database. Subsequently, in step S11", it is verified whether a matching contact from a local database can be found. If so, then in step S12", the matching contact is shown, and an UPDATE message is received in step S13", followed by step S10" in which the updated name is shown. If the result of step S11" is negative, then in step S14", the calling party's telephone number is shown and in step S15", an UPDATE message is received.

### Reference numerals

1 telephone system
2 PBX
3', 3" first device, deskphone
4, 4' second device, mobile phone
5 communication network
6 external calling device, deskphone or mobile phone
7 display device of second device
8 display device of first device
9 'Calling Party Name Resolved' element
10 contact database
11, 11' contact list

## Claims

1. Method of synchronizing contact information for at least two communication devices (3, 4) in a communication system (1), wherein a first communication device (3) and a second communication device (4) of the at least two communication devices (3, 4) are registered at the communication system (1) with the same Direct Inward Dial, DID, the method comprising the steps of
- receiving, at the communication system (1), an external call of an external calling device (6);
- identifying the telephone number of the external calling device (6);
- transmitting, by the communication system (1), a SETUP message to the first communication device (3) and another SETUP message to the second communication device (4);
- receiving, from either one of the first and second communication devices (3, 4), a message comprising contact information pertaining to the telephone number of the external calling device (6);
- sending, by the communication system (1), a message comprising the contact information pertaining to the telephone number of the external calling device (6) to the other one of the first and second communication devices (3, 4) for being displayed and stored at the other one of the first and second communication devices (3, 4).

2. Method according to claim 1, wherein the message received from either one of the first and second communication devices (3, 4) comprising the contact information pertaining to the telephone number of the incoming call is an ALERT message.

3. Method according to claim 1 or claim 2, wherein the method further comprises a step of receiving, from the other one of the first and second communication devices (3, 4) an ALERT message.

4. Method according to any one of claims 1 to 3, wherein the method further comprises a step of sending an ALERT message to the calling external communication device (6).

5. Method according to any one of the preceding claims, wherein the message comprising the contact information pertaining to the telephone number of the incoming call sent to the other one of the first and second communication devices (3, 4) is an UPDATE message.

6. Method according to any one of the preceding claims, wherein the method further comprises a step of searching a database (10) connected to the communication system (1) for contact information pertaining to the telephone number of the incoming call.

7. Method according to any one of the preceding claims, wherein the telephone system is a PBX (2), and wherein the contact information is the name of the caller using the external communication device (6).

8. Method according to any one of the preceding claims, wherein the method further comprises a step of sharing the contact information with a plurality of communication devices (3, 3', 3", 4, 4") connected to the communication system (1) and which are registered at the communication system (1) with different DIDs.

9. Method according to claim 8, wherein the plurality of communication devices (3, 3', 3", 4, 4") belong to a group of a call center.

10. Method according to any one claims 8 or 9, wherein the incoming call is a group call.

11. Method according to any one of the preceding claims, wherein the first communication device (3) is a deskphone and the second communication device is a mobile phone (4).

12. Communication system (1), in particular, PBX (2), which is adapted to carry out the method of synchronizing contact information for at least two communication devices (3, 4) in the communication system (1) according to any one of the preceding claims.

## Patentansprüche

1. Verfahren zum Synchronisieren von Kontaktinformationen für mindestens zwei Kommunikationsgeräte (3, 4) in einem Kommunikationssystem (1), wobei ein erstes Kommunikationsgerät (3) und ein zweites Kommunikationsgerät (4) der mindestens zwei Kommunikationsgeräte (3, 4) bei dem Kommunikationssystem (1) mit der gleichen Direktwahl, DID, registriert sind, wobei das Verfahren die folgenden Schritte umfasst
- Empfangen, im Kommunikationssystem (1), eines externen Anrufs von einem externen Anrufgerät (6);
- Identifizieren der Telefonnummer des externen Anrufgeräts (6);
- Senden, durch das Kommunikationssystem (1), einer SETUP-Nachricht an das erste Kommunikationsgerät (3) und einer weiteren SETUP-Nachricht an das zweite Kommunikationsgerät (4);
- Empfangen, von dem einen oder dem anderen der ersten und zweiten Kommunikationsgeräte (3, 4), einer Nachricht mit Kontaktinformationen, die sich auf die Telefonnummer des externen Anrufgeräts (6) beziehen;
- Senden, durch das Kommunikationssystem (1), einer Nachricht, die die Kontaktinformationen bezüglich der Telefonnummer des externen Anrufgeräts (6) umfasst, an das andere der ersten und zweiten Kommunikationsgeräte (3, 4), um am anderen der ersten und zweiten Kommunikationsgeräte (3, 4) angezeigt und gespeichert zu werden.

2. Verfahren nach Anspruch 1, wobei die von dem einen oder dem anderen der ersten und zweiten Kommunikationsgeräte (3, 4) empfangene Nachricht, die die Kontaktinformationen bezüglich der Telefonnummer des eingehenden Anrufs enthält, eine ALERT-Nachricht ist.

3. Verfahren nach Anspruch 1 oder Anspruch 2, wobei das Verfahren ferner einen Schritt des Empfangens einer ALERT-Nachricht von dem anderen der ersten und zweiten Kommunikationsgeräte (3, 4) umfasst.

4. Verfahren nach einem der Ansprüche 1 bis 3, wobei das Verfahren ferner einen Schritt des Sendens einer ALERT-Nachricht an das anrufende externe Kommunikationsgerät (6) umfasst.

5. Verfahren nach einem der vorhergehenden Ansprüche, wobei die Nachricht, die die Kontaktinformationen bezüglich der Telefonnummer des eingehenden Anrufs enthält, der an das andere der ersten und zweiten Kommunikationsgeräte (3, 4) gesendet wird, eine UPDATE-Nachricht ist.

6. Verfahren nach einem der vorhergehenden Ansprüche, wobei das Verfahren ferner einen Schritt des Durchsuchens einer mit dem Kommunikationssystem (1) verbundenen Datenbank (10) nach Kontaktinformationen bezüglich der Telefonnummer des eingehenden Anrufs umfasst.

7. Verfahren nach einem der vorhergehenden Ansprüche, wobei die Telefonanlage eine PBX (2) ist und wobei die Kontaktinformationen der Name des Anrufers sind, der das externe Kommunikationsgerät (6) benutzt.

8. Verfahren nach einem der vorhergehenden Ansprüche, wobei das Verfahren ferner einen Schritt des Teilens der Kontaktinformationen mit einer Vielzahl von Kommunikationsgeräten (3, 3', 3", 4, 4") umfasst, die mit dem Kommunikationssystem (1) verbunden sind und die bei dem Kommunikationssystem (1) mit unterschiedlichen DIDs registriert sind.

9. Verfahren nach Anspruch 8, wobei die Mehrzahl der Kommunikationsgeräte (3, 3', 3", 4, 4") zu einer Gruppe eines Callcenters gehören.

10. Verfahren nach einem der Ansprüche 8 oder 9, wobei der eingehende Anruf ein Gruppenruf ist.

11. Verfahren nach einem der vorhergehenden Ansprüche, wobei das erste Kommunikationsgerät (3) ein stationäres Telefon und das zweite Kommunikationsgerät ein Mobiltelefon (4) ist.

12. Kommunikationssystem (1), insbesondere eine PBX (2), das geeignet ist, das Verfahren zur Synchronisation von Kontaktinformationen für mindestens zwei Kommunikationsgeräte (3, 4) im Kommunikationssystem (1) nach einem der vorhergehenden Ansprüche durchzuführen.

## Revendications

1. Procédé de synchronisation des informations de contact pour au moins deux dispositifs de communication (3, 4) dans un système de communication (1), dans lequel un premier dispositif de communication (3) et un second dispositif de communication (4) des au moins deux dispositifs de communication (3, 4) sont enregistrés dans le système de communication (1) avec la même numérotation directe à l'arrivée, DID, le procédé comprenant les étapes suivantes
- réception, dans le système de communication (1), d'un appel externe d'un dispositif d'appel externe (6) ;
- identification du numéro de téléphone du dispositif d'appel externe (6) ;
- transmission, par le système de communication (1), d'un message SETUP au premier dispositif de communication (3) et d'un autre message SETUP au deuxième dispositif de communication (4) ;
- réception, par l'un ou l' autre des premier et second dispositifs de communication (3, 4), d'un message comprenant des informations de contact relatives au numéro de téléphone du dispositif d'appel externe (6) ;
- envoi, par le système de communication (1), d'un message comprenant les informations de contact relatives au numéro de téléphone du dispositif d'appel externe (6) à l'autre des premier et deuxième dispositifs de communication (3, 4) pour qu'il soit affiché et stocké sur l'autre des premier ou deuxième dispositifs de communication (3, 4).

2. Procédé selon la revendication 1, dans lequel le message reçu de l'un ou de l'autre des premier et second dispositifs de communication (3, 4) comprenant les informations de contact relatives au numéro de téléphone de l'appel entrant est un message d'ALERTE.

3. Procédé selon la revendication 1 ou la revendication 2, comprenant également une étape consistant à recevoir un message d'ALERTE de l'autre des premier et second dispositifs de communication (3, 4).

4. Procédé selon l'une des revendications 1 à 3, comprenant également une étape consistant à envoyer un message d'ALERTE au dispositif de communication externe appelant (6).

5. Procédé selon l'une des revendications précédentes, dans lequel le message comprenant les informations de contact relatives au numéro de téléphone de l'appel entrant envoyé à l'autre dispositif de communication (3, 4) est un message UPDATE.

6. Procédé selon l'une des revendications précédentes, comprenant également une étape consistant à rechercher dans une base de données (10) connectée au système de communication (1) des informations de contact relatives au numéro de téléphone de l'appel entrant.

7. Procédé selon l'une des revendications précédentes, dans lequel le système téléphonique est un PBX (2), et dans lequel les informations de contact sont le nom de l'appelant utilisant le dispositif de communication externe (6).

8. Procédé selon l'une des revendications précédentes, comprenant également une étape consistant à partager les informations de contact avec une pluralité de dispositifs de communication (3, 3', 3", 4, 4") connectés au système de communication (1) et enregistrés dans le système de communication (1) sous des DID différents.

9. Procédé selon la revendication 8, dans lequel la pluralité de dispositifs de communication (3, 3', 3", 4, 4") appartiennent à un groupe d'un centre d'appel.

10. Procédé selon l'une des revendications 8 ou 9, dans lequel l'appel entrant est un appel de groupe.

11. Procédé selon l'une des revendications précédentes, dans lequel le premier dispositif de communication (3) est un téléphone fixe et le second dispositif de communication un téléphone mobile (4).

12. Système de communication (1), en particulier un PBX (2), adapté pour appliquer le procédé de synchronisation des informations de contact pour au moins deux dispositifs de communication (3, 4) dans le système de communication (1) selon l'une des revendications précédentes.
